# EUROPÄISCHE PATENTSCHRIFT

(11) **EP 4 197 172 B1**
(45) Veröffentlichungstag und Bekanntmachung des Hinweises auf die Patenterteilung: **25.12.2024**
(21) Anmeldenummer: 21755762.8
(22) Anmeldetag: 05.08.2021
(51) Int. Cl.: H04L 12/40

(54) **SENSOR-ANORDNUNG EINES FAHRZEUGS**
SENSOR ASSEMBLY OF A VEHICLE
ENSEMBLE CAPTEUR D'UN VÉHICULE

(30) Priorität: 11.08.2020 DE 102020210158
(43) Veröffentlichungstag der Anmeldung: 21.06.2023
(73) Patentinhaber: Robert Bosch GmbH, 70442 Stuttgart (DE)
(72) Erfinder: SCHMID, Dirk, 75397 Simmozheim (DE); RENNER, Matthias, 71263 Weil Der Stadt (DE); GERLACH, Michael, 71263 Weil Der Stadt (DE); KLOTZ, Albrecht, 71229 Leonberg (DE); TREPTOW, Thomas, 71229 Leonberg (DE); NAGY, Balint, 71679 Asperg (DE); VOEHRINGER, Stephan, 72805 Lichtenstein (DE)
(86) Internationale Anmeldenummer: PCT/EP2021/071949
(87) Internationale Veröffentlichungsnummer: WO 2022/033964

(56) Entgegenhaltungen:
- DE-A1- 102018 124 279
- DE-A1- 102018 205 590
- US-A1- 2019 370 206

## Beschreibung

### Stand der Technik

Die vorliegende Erfindung betrifft eine Sensor-Anordnung eines Fahrzeugs sowie ein Verfahren zur Adressierung von Sensoren einer Sensor-Anordnung.

Bekannt sind Sensor-Anordnungen für Assistenzsysteme von Fahrzeugen, wie beispielsweise Einparkassistenz-Systeme, welche eine Vielzahl an üblicherweise identischen Ultraschallsensoren umfassen. Vor einer Erstinbetriebnahme des Assistenzsystems oder bei Ersatz einzelner Sensoren ist eine korrekte Adressierung der Sensoren notwendig, um die Sensordaten jedes Sensors einer korrekten physikalischen Position relativ zu den anderen Sensoren zuordnen zu können. Hierfür ist üblicherweise eine aufwändige Hardware und/oder ein komplexer Kalibrierungsprozess erforderlich.

Die DE 10 2018 124 279 A1 beschreibt ein abwärtskompatibles Bussystem mit der Fähigkeit zur Vergabe von Busknotenadressen ohne oder mit einem Bus-Shunt-Widerstand

### Offenbarung der Erfindung

Die erfindungsgemäße Sensor-Anordnung mit den Merkmalen des Anspruchs 1 zeichnet sich demgegenüber dadurch aus, dass auf besonders einfache Art und Weise und mit einfacher und kostengünstiger Hardware eine Adressierung von Sensoren möglich ist. Dies wird erreicht durch eine Sensor-Anordnung, umfassend eine Steuervorrichtung, eine Vielzahl an Sensoren, einen Datenbus, welcher zur Datenübertragung jeden Sensor mit der Steuervorrichtung verbindet, und eine Versorgungsleitung, welchen jeden Sensor zur Spannungsversorgung mit der Steuervorrichtung verbindet. Vorzugsweise wird die Spannungsversorgung der Sensoren hierbei so verstanden, dass eine elektrische Energiequelle zur Bereitstellung der Spannungsversorgung der Sensoren in die Steuervorrichtung integriert ist. Bevorzugt kann alternativ auch eine zur Steuervorrichtung separate elektrische Energiequelle zur Bereitstellung der Spannungsversorgung der Sensoren vorgesehen sein, wie beispielsweise eine Fahrzeugbatterie. Beispielsweise kann bei einer solchen separaten Energiequelle die Spannungsversorgung der Sensoren über die Steuervorrichtung erfolgen, wobei die Steuervorrichtung insbesondere eingerichtet ist, die Spannungsversorgung zu unterbrechen und an die Sensoren durchzuschalten. Vorzugsweise sind sämtliche Sensoren dabei in Parallelschaltung mittels des Datenbusses mit der Steuervorrichtung verbunden. Jeder der Sensor weist dabei eine individuelle Sensorkennung, wie beispielsweise eine individuelle Seriennummer auf, welche insbesondere von der Steuervorrichtung ausgelesen werden kann.

Jeder Sensor weist einen Shunt-Widerstand auf. Sämtliche Shunt-Widerstände der Sensoren sind dabei in Serie in die Versorgungsleitung integriert, also insbesondere in Serienschaltung miteinander verbunden. Jeder Sensor ist eingerichtet, um einen Spannungsabfall an dessen jeweiligen Shunt-Widerstand zu erfassen. Die Steuervorrichtung ist dabei eingerichtet, um jeden Sensor der Vielzahl an Sensoren mittels der individuellen Sensorkennung, insbesondere separat, zu betätigen. Vorzugsweise betätigt die Steuervorrichtung dabei alle Sensoren nacheinander oder alternativ gleichzeitig. Zudem ist die Steuervorrichtung eingerichtet, basierend auf den von den Sensoren erfassten Spannungsabfällen entlang der Versorgungsleitung jedem Sensor eine individuelle geographische Adresse zuzuweisen. Als geographische Adresse wird dabei eine Adresse angesehen, mittels welcher die Steuervorrichtung eine Reihenfolge der Sensoren am Datenbus erkennen kann. Vorzugsweise ist die Steuervorrichtung dabei eingerichtet, eine zeitliche Abfolge und/oder Anzahl der erfassten Spannungsabfälle an den Shunt-Widerständen zu ermitteln, und basierend darauf den Sensoren die geographischen Adressen zuzuweisen. Als Spannungsabfall wird dabei insbesondere ein durch eine vorbestimmte Betätigung von zumindest einem Sensor hervorgerufene Erhöhung oder Änderung einer Spannung über den Shunt-Widerstand angesehen. Das heißt, eine beispielsweise aufgrund eines Ruhestroms und/oder Spannungsoffsets im Shunt-Widerstand hervorgerufene gleichbleibende Spannung wird nicht als ein derartiger Spannungsabfall angesehen.

Mit anderen Worten weist jeder der Sensoren einen Shunt-Widerstand auf, mittels welchem erkannt werden kann, wenn ein Strom durch den jeweiligen Sensor fließt. Dadurch, dass die Shunt-Widerstände in Serie angeordnet sind, fließt der Strom bei der Betätigung eines bestimmten Sensors durch sämtliche am Datenbus vorher, also näher an der Steuervorrichtung, angeordneten Sensoren und deren Shunt-Widerstände. An jedem dieser zwischen dem betätigten Sensor und der Steuervorrichtung angeordneten Shunt-Widerstände kann somit ein Spannungsabfall registriert werden. Vorzugsweise kann am betätigten Sensor selbst, je nach dessen Konfiguration, ebenfalls ein Spannungsabfall registriert werden, oder alternativ ist an diesem kein Spannungsabfall mehr registrierbar.

Durch die Anzahl der Spannungsabfälle kann somit auf einfache Weise auf die Position des betätigten Sensors am Datenbus geschlossen werden. Dadurch können die verschiedenen Sensoren anhand des Erfassens der Spannungsabfälle an den Shunt-Widerständen voneinander unterschieden werden. Insbesondere kann hierdurch eine Reihenfolge der Sensoren ermittelt werden. Basierend auf dieser Information kann jedem der Sensoren eine individuelle geographische Adresse zugewiesen werden, sodass die von dem Sensor erzeugten Sensordaten eindeutig einem Ort zugeordnet werden können. Die geographischen Adressen der Sensoren können dabei zentral mittels der Steuervorrichtung vergeben werden. Alternativ oder zusätzlich kann jeder Sensor sich selbst oder sämtlichen Sensoren die geographische Adresse zuweisen.

Die Sensorvorrichtung kann somit den Sensordaten, welche von einem bestimmten Sensor über den Datenbus übermittelt werden, eindeutig einem vordefinierten Ort am Datenbus zuweisen. Vorzugsweise kann die Steuervorrichtung, beispielsweise wenn die Sensor-Anordnung Teil eines Parkpilot-Systems ist, hierdurch erkennen, welcher der Sensoren an welcher Position in einer Stoßfänger-Verkleidung des Fahrzeugs angeordnet ist, wodurch beispielsweise eine Richtung eines Hindernisses, welches im Umfeld des Fahrzeugs erfasst wurde, ermittelt werden kann. Beispielsweise kann hierdurch mittels der Steuervorrichtung ein Anzeigedisplay mit lateraler Auflösung, zur visuellen Anzeige des Ortes des Hindernisses, angesteuert werden. Insbesondere wird hierbei vorausgesetzt, dass eine Topologie des Datenbusses bekannt ist. Mit anderen Worten weist die Sensor-Anordnung mehrere Sensoraufnahmen auf, an welchen jeweils ein Sensor, insbesondere entlang einer Richtung des Datenbusses, angeordnet ist, wobei die Sensoraufnahmen an vordefinierten/vorbekannten Positionen relativ zueinander angeordnet sind.

Vorzugsweise erfolgt innerhalb der Sensoren, beispielsweise auf einer Platine jedes Sensors, eine Spannungsversorgung von Sensorkomponenten aller Sensoren im Wesentlichen parallel in Bezug auf die Spannungsversorgung von der Steuervorrichtung. Das heißt, eine Spannungsversorgung der Sensorkomponenten kann beispielsweise innerhalb des Sensors von der mittels der Shunt-Widerstände durchgeschleiften Versorgungsleitung abzweigen. Die Sensor-Anordnung bietet dabei den Vorteil, dass bei eindeutiger geographischer Zuweisbarkeit von geographischen Adressen an die Sensoren eine im Wesentlichen parallele Spannungsversorgung der Sensorkomponenten sämtlicher Sensoren bezüglich der Versorgungsspannung möglich ist. Eine derartige Konstruktion bewirkt, dass alle Sensorkomponenten eine optimale Spannungsversorgung erhalten können. Insbesondere haben Innenwiderstände der Sensoren oder Bauteile der Sensoren somit keinen oder nur geringen Einfluss auf die Spannungsversorgung der Sensorkomponenten. Dadurch wird ermöglicht, dass nahezu beliebig viele Sensoren am Datenbus miteinander verkettet werden können.

Vorzugsweise können die Versorgungsleitung und der Datenbus als separate Kabel vorgesehen sein. Alternativ ist es auch möglich, dass die Versorgungsleitung und der Datenbus in einem gemeinsamen Kabel zusammengefasst sind, welches vorzugsweise an einem einzigen Pin in den Sensor geführt wird.

Der Datenbus kann vorzugsweise eine einzige Datenleitung aufweisen, mit welcher jeder der Sensoren verbunden ist. Alternativ kann der Datenbus auch zwei oder mehr Datenleitungen aufweisen, wobei jeder Sensor mit jeder Datenleitung verbunden ist.

Die Sensoren sind vorzugsweise identisch, also baugleich, ausgebildet, wobei jedoch jeder Sensor eine individuelle Sensorkennung, wie beispielsweise eine individuelle Seriennummer, aufweist.

Durch die Verbindung der Sensoren mit der Steuervorrichtung über einen Datenbus kann somit bei besonders geringem Hardwareaufwand, insbesondere ohne dass eine separate Verkabelung jedes Sensors mit der Steuervorrichtung über eine separate Leitung notwendig ist, jeder Sensor gezielt mit der Steuervorrichtung kommunizieren. Ein weiterer Vorteil, der sich hierdurch ergibt, ist, dass ein einfacher Austausch von baugleichen Sensoren ermöglicht wird, wobei der ausgetauschte Sensor automatisch und auf einfache Weise adressiert werden kann.

Die Unteransprüche haben bevorzugte Weiterbildungen der Erfindung zum Inhalt.

Vorzugsweise erzeugt der Sensor nach der Betätigung durch die Steuervorrichtung ein Stromsignal auf der Versorgungsleitung, welches eine bestimmte Frequenzsignatur aufweist. Das heißt, durch die Betätigung der Sensoren mittels der Steuervorrichtung erzeugt jeder Sensor ein Stromsignal mit einer bestimmten, vorzugsweise individuellen, Frequenzsignatur in der Versorgungsleitung, wodurch die Sensoren insbesondere voneinander unterscheidbar sind.

Bevorzugt erfolgt ein Spannungsabgriff zur Spannungsversorgung von Sensorkomponenten jedes Sensors an der Versorgungsleitung vor oder nach dem jeweiligen Shunt-Widerstand. Ein Spannungsabgriff vor dem Shunt-Widerstand bewirkt dabei, dass die eigene Versorgung der Sensorkomponenten nicht in die Messung des Spannungsabfalls am Shunt-Widerstand eingeht, wodurch die Spannungsabfälle an den Shunt-Widerständen mit besonders einfachen Mitteln erfasst oder abgeschätzt werden können. Alternativ kann die Versorgung der Sensorkomponenten auch nach dem Shunt-Widerstand abgezweigt werden.

Vorzugsweise ist der Shunt-Widerstand ein Metallfilm-Widerstand oder eine Kupfer-Leiterbahn. Vorzugsweise kann eine Kupfer-Leiterbahn Teil einer Sensor-Leiterplatte des Sensors sein. Dadurch kann der Shunt-Widerstand auf besonders einfache und kostengünstige Art und Weise bereitgestellt werden. Alternativ kann der Shunt-Widerstand auch als wenigstens ein Bonddraht ausgestaltet sein bzw. einen Bonddraht umfassen. Hierbei gibt es bei der Ausgestaltung unter anderem folgende beiden Möglichkeiten, den Shunt-Widerstand mittels einer entsprechenden Verbondung des ASICs der jeweiligen Sensorkomponenten zu realisieren. Die erste Option ist, dass die Versorgungsleitung von einer Kontaktstelle auf dem Leadframe des ASICs, dem sogenannten "Pin", mittels eines Bonddrahts auf das Pad im Silizium gebondet ist, von wo aus, im Falle eines Ultraschallsensors, die ASIC-Versorgung entsprechend weitergeführt werden kann. Von diesem Pad ist zudem eine niederohmige Verbindung, welche ebenfalls als Bonddraht ausgestaltet sein kann, zum Nachbarpad hergestellt, wobei von diesen Nachbarpad wieder auf das Leadframe mittels eines entsprechenden Bonddrahts gebondet ist. Die Summe der Widerstandswerte der Bonddrähte und gegebenenfalls der Widerstandswert der Verbindung zwischen den Pads im Silizium stellt den eigentlichen Shunt-Widerstand dar. Die zweite Option ist, dass die Versorgungsleitung mittels eines Bonddrahts vom Leadframe auf das Pad im Silizium gebondet ist. Von der Kontaktstelle des Leadframes ("Pin") ist zudem zur Kontaktstelle des Leadframes für den Nachbar-Pin gebondet, wobei diese Bond-Verbindung bei dieser zweiten Option den Shunt-Widerstand darstellt. Je nach benötigtem Widerstandswert und Stromtragfähigkeit, kann eine Ausführung des Shunt-Widerstands auch Doppel- oder Dreifachbonds enthalten. Außerdem können das Material und die Dicke des jeweiligen Bonddrahts den Anforderungen entsprechend angepasst werden. Vorteil einer entsprechenden Ausführung des Shunt-Widerstands mittels wenigstens eines Bonddrahtes ist hierbei, dass die Kosten für einen solchen Shunt-Widerstand deutlich unter den Kosten für einen herkömmlichen Shunt-Widerstand liegen. Dass ein entsprechend ausgestalteter Shunt-Widerstand überhaupt genutzt werden kann, liegt darin begründet, dass die Anforderungen an die Widerstandstoleranz von -50% sowie die max. Stromtragefähigkeit von unter 2A, welche insbesondere für Ultraschallanwendungen gelten, mittels eines solchen Bonddraht-Shunt-Widerstands weiterhin eingehalten werden können.

Besonders bevorzugt weist der Shunt-Widerstand einen elektrischen Widerstand von maximal 0,1 Ω, vorzugsweise maximal 0,01 Ω, und insbesondere mindestens 0,001 Ω auf. Vorzugsweise handelt es sich somit um einen niederohmigen Widerstand. Dadurch wird sichergestellt, dass aufgrund der Shunt-Widerstände, also für die Ermittlung der Positionen der Sensoren am Datenbus, möglichst wenig elektrische Leistung verbraucht wird.

Bevorzugt weist jeder Sensor einen Differenzverstärker auf, mittels welchem der Spannungsabfall über den jeweiligen Shunt-Widerstand ermittelt wird. Vorzugsweise ist der Differenzverstärker eingerichtet, den Spannungsabfall über den Shunt-Widerstand zu verstärken, wodurch eine besonders genaue und zuverlässige Erfassung der Spannungsabfälle ermöglicht werden kann.

Besonders bevorzugt umfasst jeder Sensor ferner einen Filter, welcher eingerichtet ist, ein von dem jeweiligen Differenzverstärker erzeugtes Ausgangssignal zu filtern. Insbesondere ist der Filter ein Bandpassfilter oder ein Optimalfilter. Vorzugsweise kann der Filter eingerichtet sein, das Ausgangssignal des Differenzverstärkers mittels Gleichspannungs-Kopplung und/oder mittels Wechselspannungs-Kopplung zu filtern. Als Gleichspannungs-Kopplung wird eine Erfassung sämtlicher Signalanteile eines Eingangssignals des Differenzverstärkers angesehen. Dadurch ergibt sich ein besonders einfacher und kostengünstiger Aufbau der Sensor-Anordnung. Eine eindeutige Detektion eines Stromflusses in den entsprechenden Shunt-Widerstand kann vorzugsweise durch Vergleich des entsprechenden Spannungsabfalls mittels eines vordefinierten Spannungs-Schwellwerts erfasst werden. Als Wechselspannungs-Kopplung wird eine Erfassung nur eines Wechselspannungs-Anteils des Eingangssignals des Differenzverstärkers angesehen. Dadurch kann eine besonders robuste Ermittlung der Spannungsabfälle mit geringer Störanfälligkeit derart erfolgen, um eine Betätigung bestimmter Sensoren eindeutig feststellen zu können. Insbesondere wenn ein Stromimpuls bei der Betätigung eines bestimmten Sensors mit einer bestimmten Frequenzsignatur erzeugt wird, kann mittels des Filters mit Wechselspannungs-Kopplung diese Frequenzsignatur im erfassten Spannungsabfall ermittelt werden. Hierdurch kann genau erkannt werden, ob eine gezielte Betätigung des Sensors vorliegt, da beispielsweise eine Ruhestromaufnahme oder ein Spannungsoffset in der Versorgungsleitung herausgefiltert werden.

Vorzugsweise ist die Masseleitung und/oder der Datenbus durch jeden Sensor hindurchgeführt, vorzugsweise jeweils mittels eines Eingangspins und eines

Ausgangspins pro Sensor. Insbesondere ist die Masseleitung und/oder der Datenbus dadurch in mehrere einzelne Teilstücke unterteilt. Vorzugsweise ist der Datenbus derart durch die Sensoren hindurchgeführt, dass ein Datenaustausch weiterhin wie bei einer parallelen Schaltung der Sensoren erfolgt. Das heißt, innerhalb der Sensoren, beispielsweise auf einer Platine jedes Sensors, erfolgt der Datenaustausch parallel in Bezug auf die Steuervorrichtung. Dadurch können sämtliche Schnittstellen der Sensoren mittels Pins verbunden werden, wodurch ein Anschluss der Sensoren an die Masseleitung und/oder den Datenbus mittels zusätzlicher Verbindungsleitungen und Spleiße nicht erforderlich ist. Je nach Konstruktion der Sensor-Anordnung können sich dadurch Kostenvorteile ergeben.

Besonders bevorzugt weist die Steuervorrichtung einen nicht-flüchtigen Speicher auf. Alternativ oder zusätzlich weist jeder Sensor einen nicht-flüchtigen Speicher auf. Mittels eines solchen nicht-flüchtigen Speichers können die zugewiesenen geographischen Adressen gespeichert werden, sodass die Prozedur zum Zuweisen nur einmal durchgeführt werden muss, da die geographischen Adressen anschließend aus dem nicht-flüchtigen Speicher ausgelesen werden können. Alternativ können die Steuervorrichtung und/oder sämtliche Sensoren speicherlos, das heißt ohne Speicher, ausgebildet sein. Dadurch kann eine besonders kostengünstige Sensor-Anordnung bereitgestellt werden. In diesem Fall ist die Adressierung vor jedem Betrieb der Sensor-Anordnung erforderlich. Aufgrund der speziellen Konstruktion der Sensoranordnung kann dabei dennoch eine besonders schnelle und ressourcenschonende Adressierung durchgeführt werden.

Bevorzugt sind die Sensoren Ultraschallsensoren. Die Sensor-Anordnung ist somit insbesondere ein Ultraschall-System, welches zur Abstandserfassung verwendet werden kann. Beispielsweise kann die Sensor-Anordnung zur Abstandserfassung für ein Parkpilotsystem oder ein anderes Fahrerassistenzsystem dienen. Vorzugsweise sind die Ultraschallsensoren an festen Positionen in einem Verkleidungsteil des Fahrzeugs befestigt. Insbesondere sind die Ultraschallsensoren dabei in einer Stoßstange des Fahrzeugs befestigt, wobei pro Stoßstange bevorzugt mindestens 2 und maximal 12 Ultraschallsensoren vorgesehen sind.

Weiterhin führt die Erfindung zu einem Verfahren zur Adressierung von Sensoren einer Sensor-Anordnung. Vorzugsweise handelt es sich bei der Sensor-Anordnung um die oben beschriebene Sensor-Anordnung.

Die Sensor-Anordnung weist eine Steuervorrichtung, eine Vielzahl an Sensoren, wobei jeder Sensor eine individuelle Sensorkennung aufweist, einen Datenbus, welcher jeden Sensor mit der Steuervorrichtung verbindet, und eine Versorgungsleitung, welche jeden Sensor zur Spannungsversorgung mit der Steuervorrichtung verbindet, auf. Jeder Sensor weist einen Shunt-Widerstand auf. Sämtliche Shunt-Widerstände der Vielzahl an Sensoren sind dabei in Serie in die Versorgungsleitung integriert, das heißt, in Serienschaltung in der Versorgungsleitung angeordnet. Das Verfahren umfasst dabei pro Sensor die Schritte:
- Identifizieren der Sensorkennung des Sensors,
- Betätigen des Sensors basierend auf der Sensorkennung,
- Ermitteln von Spannungsabfällen an den Shunt-Widerständen sämtlicher Sensoren, und
- Zuweisen einer individuellen geographischen Adresse an den betätigten Sensor basierend auf der ermittelten Position.

Das Ermitteln der Position des betätigten Sensors erfolgt dabei basierend auf den erfassten Spannungsabfällen entlang der Versorgungsleitung. Vorzugsweise erfolgt das Ermitteln der Position des betätigten Sensors basierend auf einer zeitlichen Abfolge und/oder Anzahl der erfassten Spannungsabfälle entlang der Versorgungsleitung. Durch Erfassen der Spannungsabfälle an den Shunt-Widerständen kann auf sehr einfache Weise ermittelt werden, wie die Sensoren relativ zueinander angeordnet sind, also in welcher Reihenfolge sich diese befinden. Dadurch, dass die Shunt-Widerstände in Serie angeordnet sind, fließt der Strom bei der Betätigung eines bestimmten Sensors durch sämtliche am Datenbus vorher, also näher an der Steuervorrichtung, angeordneten Shunt-Widerstände. An jedem dieser Shunt-Widerstände kann somit ein Spannungsabfall registriert werden. Durch die Anzahl der Spannungsabfälle kann somit auf einfache Weise auf die Position des betätigten Sensors am Datenbus geschlossen werden. Das Verfahren erlaubt somit eine besonders einfache Möglichkeit zur Adressierung der Sensoren, welche bei einem besonders kostengünstigen und hinsichtlich niedriger elektrischer Verluste optimierten Aufbau der Sensor-Anordnung automatisch durchgeführt werden kann.

Bevorzugt wird das Verfahren zur Adressierung der Sensoren genau einmal, insbesondere bei einer Erstinbetriebnahme der Sensor-Anordnung durchgeführt. Alternativ kann das Verfahren bei jeder Inbetriebnahme der Sensor-Anordnung durchgeführt werden.

Bevorzugt werden sämtliche Sensoren nacheinander betätigt, wobei nach dem Betätigen sämtlicher Sensoren eine Reihenfolge der Sensoren am Datenbus basierend auf einer absteigenden Anzahl an erfassten Spannungsabfällen pro Sensor ermittelt wird. Basierend auf der Reihenfolge der Sensoren am Datenbus können allen Sensoren anschließend die individuellen geometrischen Adressen zugewiesen werden. Vorzugsweise wird hierbei jeder Sensor genau einmal separat betätigt. Alternativ können alle Sensoren auch mehrmals betätigt werden, wobei insbesondere jedoch alle Sensoren jeweils gleich oft betätigt werden. Mit anderen Worten werden die Sensoren entsprechend der absteigenden Anzahl an erfassten Spannungsabfällen pro Sensor ausgehend von der Steuervorrichtung sortiert. Das heißt, derjenige Sensor mit den meisten ermittelten Spannungsabfällen an dessen Shunt-Widerstand befindet sich an erster Position am Datenbus aus der Richtung der Steuervorrichtung. Derjenige Sensor mit den wenigsten registrierten Spannungsabfällen befindet sich dementsprechend am Ende des Datenbusses. Somit kann besonders einfach und mit geringem Rechenaufwand die Reihenfolge der Sensoren am Datenbus ermittelt werden, anhand welcher auch die geographischen Adressen eindeutig zugewiesen werden können.

Vorzugsweise wird jeder Sensor separat betätigt, wobei während jeder Betätigung eines einzelnen Sensors eine Gesamtanzahl an Spannungsabfall an sämtlichen Sensoren ermittelt wird. Die Position jedes einzeln betätigten Sensors wird dabei relativ zu den weiteren Sensoren basierend auf der Gesamtanzahl an erfassten Spannungsabfällen an sämtlichen Sensoren ermittelt. Das heißt, anhand der Gesamtanzahl an Spannungsabfällen, welche bei der Betätigung eines einzelnen Sensors erfasst werden, kann die Anzahl an Sensoren, welche sich am Datenbus zwischen dem betätigten Sensor und der Steuervorrichtung befinden ermittelt werden. Beispielsweise, wenn die Spannungsversorgung der Sensorkomponenten des betätigten Sensors vor dessen Shunt-Widerstand abgezweigt wird, entspricht die erfasste Anzahl an Spannungsabfällen der Anzahl an vorher angeordneten Sensoren. Dadurch kann ebenfalls auf besonders einfache Weise und mit geringem Rechenaufwand die Position jedes Sensors am Datenbus ermittelt werden. Das Zuweisen der geographischen Adresse kann dabei jeweils unmittelbar nach dem Ermitteln der Position des betätigten Sensors erfolgen, oder alternativ nachdem alle Positionen sämtlicher Sensoren ermittelt wurden.

Alternativ wird bevorzugt jeder Sensor zeitgleich, insbesondere simultan, betätigt. Nach dem zeitgleichen Betätigen jedes Sensors wird die an jedem Sensor ermittelte Höhe eines Spannungsabfalls ermittelt. Es wird also ermittelt, wie hoch der jeweils gemessene Gesamtspannungsabfall an dem jeweiligen Sensor in der Kette ist. Die Position des betätigten Sensors relativ zu den weiteren Sensoren wird folgend basierend auf der an jedem Sensor ermittelten Höhe eines Spannungsabfalls ermittelt. Der in Richtung des Datenbusses nächstliegende Sensor ermittelt entsprechend den höchsten Gesamtspannungsabfall, da dieser die Spannungsabfälle alle in der Reihe hinter ihm liegenden Sensoren erfasst. Der in Richtung des Datenbusses am weitesten entfernt liegende Sensor ermittelt demgegenüber den niedrigsten Gesamtspannungsabfall. Die Reihenfolge der Sensoren am Datenbus wird entsprechend basierend auf einer absteigenden Höhe der Spannungsabfälle an den jeweiligen Sensoren ermittelt. Der Vorteil des simultanen Verfahrens ist die schnellere Abarbeitung gegenüber dem sequentiellen Verfahren und die Unabhängigkeit der Dauer von der Anzahl der Sensoren am Bus. Jeder Sensor ist bei diesem simultanen Verfahren bevorzugt dazu ausgebildet, die Höhe des Spannungsabfalls mit hinreichender Genauigkeit zu messen und anschließend an die Steuervorrichtung zu übermitteln.

Bevorzugt werden die Spannungsabfälle über die Shunt-Widerstände jeweils mittels eines Differenzverstärkers pro Sensor verstärkt. Ein vom Differenzverstärker erzeugtes Ausgangssignal wird jeweils mittels eines Filters pro Sensor gefiltert. Basierend auf dem gefilterten Ausgangssignal wird eine Höhe des Spannungsabfalls am Shunt-Widerstand ermittelt. Vorzugsweise filtert der Filter das Ausgangssignal des Differenzverstärkers mittels eines Bandpassfilters oder Optimalfilters. Basierend auf der ermittelten Höhe des Spannungssignals kann vorzugsweise eine erfasste Betätigung des entsprechenden Sensors verifiziert werden. Vorzugsweise kann durch die Wahl der Filterparameter entsprechend der Frequenzsignatur eines von der Steuervorrichtung bereitgestellten Betätigungssignals, mittels welchem der Sensor betätigt wird, eindeutig festgestellt werden, ob eine tatsächliche, gezielte Betätigung vorliegt, oder ob ein Störsignal oder dergleichen erfasst wurde. Dadurch kann eine besonders hohe Robustheit bei dem Verfahren zur Adressierung der Sensoren ermöglicht werden.

Besonders bevorzugt wird jedem Sensor vor dem Betätigen eine logische Adresse basierend auf der Sensorkennung zugewiesen. Das Betätigen des Sensors erfolgt dabei mittels der logischen Adresse. Mittels Zuweisen von logischen Adressen an die Sensoren kann die Steuervorrichtung die Sensoren besonders einfach voneinander unterscheiden und direkt separat ansteuern.

Vorzugsweise wird jede zugewiesene geographische Adresse in einem nicht-flüchtigen Speicher des jeweiligen Sensors und/oder in einem nicht-flüchtigen Speicher der Steuervorrichtung gespeichert. Beispielsweise ist dadurch nur ein einmaliges Adressieren der Sensoren erforderlich. Bei einem Neustart der Sensor-Anordnung können die geometrischen Adressen einfach aus dem/den nicht-flüchtigen Speicher(n) mittels der Steuervorrichtung ausgelesen werden, sodass ein erneutes Adressieren der Sensoren nicht notwendig ist.

Bevorzugt kann basierend auf einer nicht bekannten und/oder geänderten individuellen Sensorkennung erkannt werden, wenn einer der Sensoren ausgetauscht wurde, beispielsweise im Reparaturfall. Im Ansprechen auf eine solche Erkennung kann vorzugsweise eine neue Zuweisung einer geometrische initiiert werden.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht einer Sensor-Anordnung gemäß einem ersten Ausführungsbeispiel der Erfindung,
- Figur 2: eine vereinfachte schematische Ansicht der Sensor-Anordnung der Figur 1 in einem an einem Fahrzeug-Verkleidungsteil verbautem Zustand, und
- Figur 3: eine vereinfachte schematische Ansicht einer Sensor-Anordnung gemäß einem zweiten Ausführungsbeispiel der Erfindung.

### Bevorzugte Ausführungsformen der Erfindung

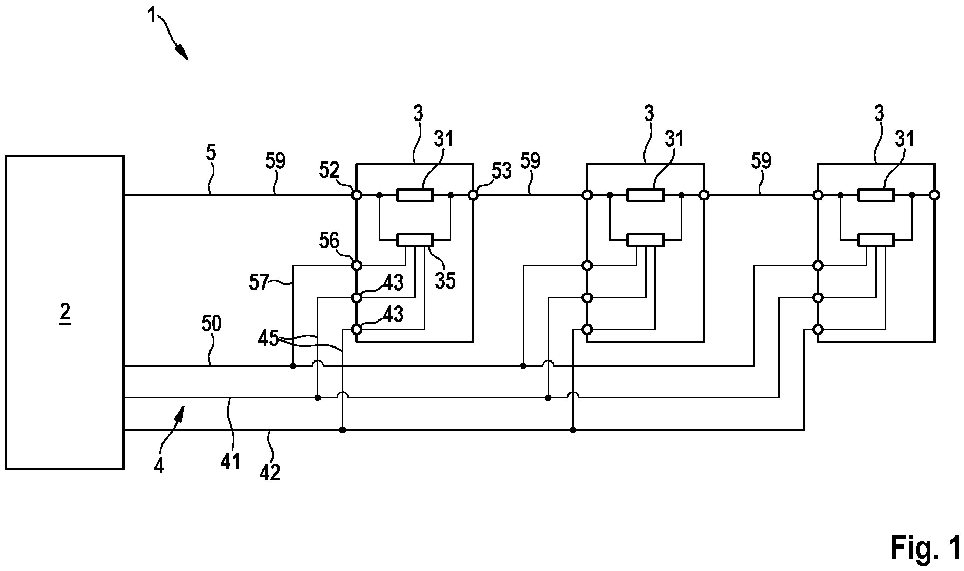

Figur 1 zeigt eine vereinfachte schematische Ansicht einer Sensor-Anordnung 1 eines Fahrzeugs gemäß einem ersten Ausführungsbeispiel der Erfindung. Die Sensor-Anordnung 1 umfasst eine Steuervorrichtung 2 und eine Vielzahl an Sensoren 3. Beispielsweise kann die Sensor-Anordnung 1, wie in den Figuren gezeigt, drei Sensoren 3 umfassen. Alternativ ist eine beliebige Anzahl an Sensoren 3 möglich, vorzugsweise zwei, vier, oder sechs Sensoren 3. Die Sensoren 3 sind in der Konstruktion identisch, also baugleich, weisen jedoch individuelle Seriennummern auf, welche sich unterscheiden. Bei den Sensoren 3 handelt es sich um Ultraschallsensoren, welche durch Aussenden und Empfangen von Ultraschallsignalen eine Erkennung von Objekten in der nahen Umgebung des Fahrzeugs ermöglichen.

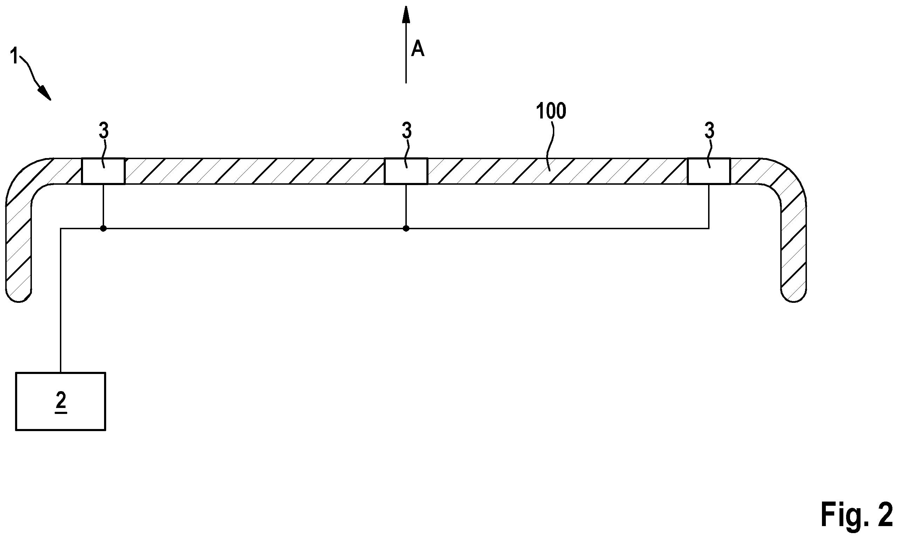

Die Sensor-Anordnung 1 kann, wie in der Figur 2 vereinfacht schematisch dargestellt, in einem Verkleidungsteil 100 eines (nicht dargestellten) Fahrzeugs verbaut sein. Die Sensoren 3 sind dabei jeweils an vordefinierten Positionen des Verkleidungsteils 100 angeordnet. Um von den Sensoren 3 erzeugte Sensordaten räumlich zuordnen zu können, also beispielsweise zu unterscheiden, ob bestimmte Sensordaten von dem in Fahrtrichtung A linken Sensor 3 oder dem rechten Sensor 3 erzeugt wurden, ist eine geographische Adressierung jedes Sensors 3 vor Inbetriebnahme einer Umfelderfassung mittels der Sensor-Anordnung 1 erforderlich.

Der konstruktive Aufbau der Sensor-Anordnung 1 sowie die Durchführung der Adressierung der Sensoren 3 werden nachfolgend beschrieben.

Die Sensor-Anordnung 1 umfasst eine Versorgungsleitung 5, eine Masseleitung 50 und einen Datenbus 4, welcher zwei parallele Datenleitungen 41, 42 aufweist.

Die Masseleitung 50 und die beiden Datenleitungen 41, 42 sind jeweils als einstückige Leitung ausgebildet, welche die Sensoren 3 mit der Steuervorrichtung 2 verbinden. Zur Verbindung mit dem Sensor 3 ist pro Leitung ein Verbindungselement 45, 57 in Form eines kurzen Leitungsstücks vorgesehen. Zudem weist jeder Sensor 3 Ausgangspins 43, 56 auf, zur Verbindung mit diesen Verbindungselementen 45, 57.

Die Versorgungsleitung 5 ist in mehrere Versorgungsleitungstücke 59 aufgeteilt, welche jeweils die Steuervorrichtung 2 mit dem ersten Sensor 3 sowie nacheinander angeordnete Sensoren 3 miteinander verbinden. Die Versorgungsleitungstücke 59 sind dabei mittels eines Eingangspins 52 bzw. eines Ausgangspins 53 mit jedem Sensor 3 verbunden.

Mittels der individuellen Sensorkennungen kann die Steuervorrichtung 2 die Sensoren 3 voneinander unterscheiden. Dabei kann die Steuervorrichtung 2 jedem Sensor 3 basierend auf dessen individueller Sensorkennung eine logische Adresse zuweisen, um die Sensoren 3 separat ansteuern und unterscheiden zu können.

Jeder Sensor 3 weist einen Shunt-Widerstand 31 auf. Die Shunt-Widerstände 31 aller Sensoren 3 sind in Serienschaltung in die Versorgungsleitung 5 integriert. Die Verkabelung bezüglich der Shunt-Widerstände 31 kann somit als "Daisy Chain" angesehen werden.

Die Shunt-Widerstände 31 sind niederohmig ausgebildet, insbesondere mit einem elektrischen Widerstand von maximal 0,1 Ω, sodass nur eine geringe elektrische Leistung an den Shunt-Widerständen 31 abfällt.

Zudem weist jeder Sensor 3 Sensorkomponenten 35 auf, welche beispielsweise zur Erzeugung und zum Empfang der Ultraschallsignale ausgebildet sind. Eine Spannungsversorgung der Sensorkomponenten 35 erfolgt dabei mittels eines Spannungsgabgriffs vor dem jeweiligen Shunt-Widerstand 31 des Sensors 3.

Dadurch, dass die Shunt-Widerstände 31 niederohmig sind, können die Sensorkomponenten 35 im Wesentlichen als parallel geschaltet bezüglich der Spannungsversorgung mittels der Steuervorrichtung 2 angesehen werden.

Jeder Sensor 3 ist dabei eingerichtet, einen Spannungsabfall an dessen Shunt-Widerstand 31 zu erfassen. Ein derartiger Spannungsabfall kann erfasst werden, wenn ein Strom durch den entsprechenden Shunt-Widerstand 31 fließt. Dies ist dann der Fall, wenn in der Reihe der Sensoren 3 entlang des Datenbusses 4 einer der nachfolgenden Sensoren 3 betätigt wird.

Die Erfassung und Analyse des Spannungsabfalls am Shunt-Widerstand 31 erfolgt dabei mittels eines Differenzverstärkers und eines Filters. Differenzverstärker und Filter sind dabei Teil der Sensorkomponenten 35 und in den Figuren nicht separat dargestellt. Der Differenzverstärker ist eingerichtet, um den Spannungsabfall über den Shunt-Widerstand 31 zu verstärken. Der Filter ist ferner eingerichtet, ein Ausgangssignal des Differenzverstärkers mittels Bandpassfilter oder Optimalfilter zu filtern. Dadurch können Frequenzen in dem am Shunt-Widerstand 31 abfallenden Spannungssignal ermittelt werden, um eine zuverlässige Erkennung eines Stromflusses durch den entsprechenden Sensor 3 mit hoher Störfestigkeit zu ermöglichen.

Die geographische Adressierung der Sensoren 3 kann dabei basierend auf einer Erfassung der Spannungsabfälle entlang der Versorgungsleitung 5 erfolgen, wie nachfolgend beschrieben.

Zu Beginn erfolgt eine Betätigung sämtlicher Sensoren 3 durch die Steuervorrichtung 2. Dabei wird jeder Sensor 3 separat, also nacheinander betätigt. Die Betätigung erfolgt dabei derart, dass jeder Sensor 3 ein Ultraschallsignal aussenden. Hierfür wird jeder Sensor mit einem Stromimpuls mit einer vorbestimmten Frequenzsignatur betätigt. Gleichzeitig erfassen während der Betätigung von irgendeinem Sensor 3 sämtliche Sensoren 3, ob an dessen Shunt-Widerstand 31 eine Spannung abfällt. Durch Analyse des mittels Differenzverstärker und Filter optimierten Spannungsabfalls am Shunt-Widerstand 31 kann dabei eindeutig erkannt werden, ob der entsprechende Sensor 3 gezielt von der Steuervorrichtung 2 betätigt wurde, oder ob beispielsweise ein Störsignal oder ein konstanter Spannungsoffset vorliegt.

Nachdem jeder Sensor 3 genau einmal betätigt wurde, wird die Anzahl an erfassten Spannungsabfällen pro Sensor 3 ermittelt. Eine Reihenfolge der Sensoren 3 am Datenbus wird anschließend basierend auf einer absteigenden Anzahl an erfassten Spannungsabfällen pro Sensor 3 ermittelt. Das heißt, derjenige Sensor 3 mit den meisten Spannungsabfällen befindet sich an erster Position, ausgehend von der Steuervorrichtung 2, am Datenbus 4.

Entsprechend der ermittelten Reihenfolge werden von der Steuervorrichtung 2 anschließend die jeweiligen geographischen Adressen an die Sensoren 3 zugewiesen.

Die Sensor-Anordnung 1 und das Verfahren zur Adressierung zeichnen sich dabei durch einen besonders kostengünstigen Aufbau und eine einfache Durchführbarkeit aus. Ein besonderer Vorteil ist, dass bei nahezu paralleler Spannungsversorgung sämtlicher Sensoren 3 dennoch eine Art Reihen-Verkettung der Sensoren 3 mittels der Shunt-Widerstände 31 vorliegt, welche erlaubt, durch Zählen der Spannungsabfälle entlang des Datenbusses 4 die relativen Positionen aller Sensoren 3 zueinander zu ermitteln.

Dadurch, dass die Spannungsversorgung nahezu parallel erfolgt, können sämtliche Sensoren 3 mit derselben Betriebsspannung versorgt werden. Somit ist eine Erweiterung der Sensor-Anordnung 1 um eine beliebige Anzahl an Sensoren 3 möglich, wobei stets sämtliche Sensoren 3 bei einfachem und kostengünstigem apparativen Aufbau der Sensor-Anordnung 1 mit derselben Spannung versorgt werden können.

Eine alternative Durchführung der Adressierung wird nachfolgend beschrieben.

Anstatt der oben beschriebenen Sortierung im Nachhinein kann auch für jeden Sensor 3 separat dessen Position am Datenbus 4 auf einfache Weise ermittelt werden. Hierfür wird jeder Sensor 3 separat genau einmal betätigt.

Nach dem Betätigen eines einzelnen Sensors 3 wird eine Gesamtanzahl an Spannungsabfällen an sämtlichen Sensoren 3 der Sensor-Anordnung 1 ermittelt. Die Position des einzelnen betätigten Sensors 3 relativ zu den weiteren Sensoren 3 wird anschließend basierend auf der Gesamtanzahl an Spannungsabfällen in der Sensor-Anordnung 1 ermittelt. Basierend auf der Gesamtanzahl an Spannungsabfällen kann die Steuervorrichtung 2 dabei erkennen, wie viele Sensoren 3 am Datenbus 4 vor dem gerade betätigten Sensor 3 angeordnet sind, und daraus die Position des betätigten Sensors 3 erkennen.

Da bei einer Betätigung eines bestimmten Sensors 3 jeweils ein Strom durch sämtliche am Datenbus 4 vorher angeordnete Sensoren 3 fließt, wird an jedem dieser Sensoren 3 ein Spannungsabfall detektiert. Wird beispielsweise bei der in der Figur 1 gezeigten Sensor-Anordnung 1 der mittlere Sensor 3 betätigt, so liegt nur an dem linken, also dem ersten Sensor 3 am Datenbus 4 ein Stromfluss im Shunt-Widerstand 31 vor. Basierend hierauf kann die Steuervorrichtung 2 erkennen, dass nur ein Sensor 3 vor dem betätigten Sensor 3 angeordnet ist, und dieser sich somit an zweiter Stelle am Datenbus 4 befindet.

Die zugewiesene geographische Adresse kann anschließend in einen nicht-flüchtigen Speicher der Steuervorrichtung 2 und/oder in einen nicht-flüchtigen Speicher des betätigten Sensors 3 gespeichert werden. Alternativ können auch speicherlose Sensoren 3 und eine speicherlose Steuervorrichtung 2 vorgesehen sein, wobei die Adressierung bei jeder Inbetriebnahme der Sensor-Anordnung 1 durchgeführt wird.

In einer weiteren Alternative erzeugen alle Sensoren 3 zeitgleich, also synchron, einen Stromimpuls. Nach dem zeitgleichen Betätigen jedes Sensors 3 wird die an jedem Sensor ermittelte Höhe eines Spannungsabfalls ermittelt. Es wird also ermittelt, wie hoch der jeweils gemessene Gesamtspannungsabfall an dem jeweiligen Sensor 3 in der Kette ist. Die Position des betätigten Sensors 3 relativ zu den weiteren Sensoren 3 wird folgend basierend auf der an jedem Sensor 3 ermittelten Höhe eines Spannungsabfalls ermittelt. Der in Richtung des Datenbusses 4 nächstliegende linke Sensor 3 ermittelt entsprechend den höchsten Gesamtspannungsabfall, da dieser die Spannungsabfälle alle in der Reihe hinter ihm liegenden Sensoren 3 erfasst. Der in Richtung des Datenbusses 4 am weitesten entfernt liegende rechte Sensor 3 ermittelt demgegenüber den niedrigsten Gesamtspannungsabfall. Die Reihenfolge der Sensoren 3 am Datenbus 4 wird entsprechend basierend auf einer absteigenden Höhe der Spannungsabfälle an den jeweiligen Sensoren 3 ermittelt.

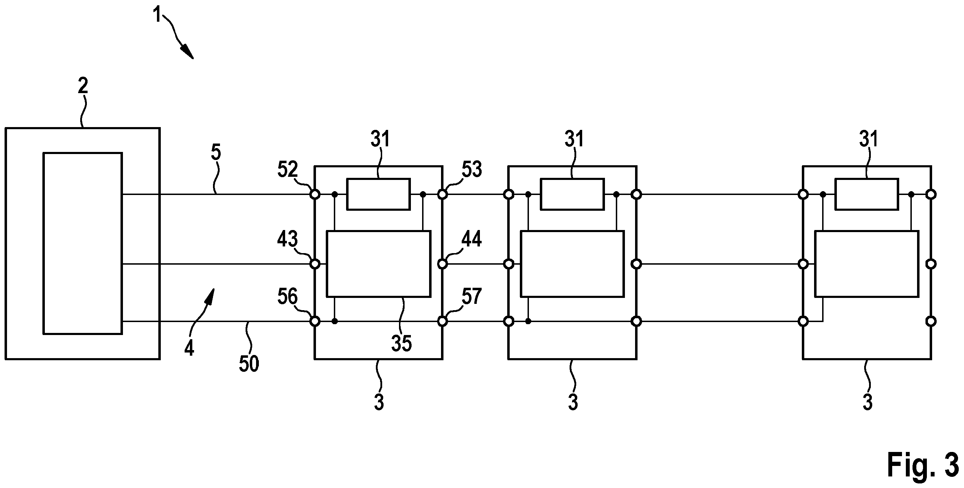

Figur 3 zeigt eine vereinfachte schematische Ansicht einer Sensor-Anordnung 1 gemäß einem zweiten Ausführungsbeispiel der Erfindung. Das zweite Ausführungsbeispiel entspricht im Wesentlichen dem ersten Ausführungsbeispiel der Figur 1 mit einer alternativen Verkabelung der Sensoren 3. Im zweiten Ausführungsbeispiel der Figur 3 sind die Versorgungsleitung 5, die Masseleitung 50 sowie der Datenbus 4 jeweils durch jeden Sensor 3 durchgeführt. Dabei weist jeder Sensor 3 pro Leitung 5, 4, 50 einen Eingangspin 52, 43, 56 und einen Ausgangspin 53, 44, 57 auf. Innerhalb der Sensoren 3, beispielsweise auf einer Platine jedes Sensors 3, erfolgt dabei nach wie vor ein Spannungsabgriff so, dass die mit Spannung zu versorgenden Sensorkomponenten 35 aller Sensoren 3 weiterhin im Wesentlichen parallel in Bezug auf die Steuervorrichtung 2 geschaltet sind. Analog kann der Datenaustausch weiterhin parallel in Bezug auf die Steuervorrichtung 2 erfolgen. Mit einer solchen Konstruktion können Verbindungsleitungen und Verzweigungsstellen an den Leitungen, sogenannte "Spleiße", eingespart werden.

## Patentansprüche

1. Sensor-Anordnung eines Fahrzeugs, umfassend:
- eine Steuervorrichtung (2),
- eine Vielzahl an Sensoren (3), wobei jeder Sensor (3) eine individuelle Sensorkennung aufweist,
- einen Datenbus (4), welcher jeden Sensor (3) mit der Steuervorrichtung (2) verbindet, und
- eine Versorgungsleitung (5), welche jeden Sensor (3) zur Spannungsversorgung mit der Steuervorrichtung (2) verbindet,
wobei jeder Sensor (3) einen Shunt-Widerstand (31) aufweist,
wobei sämtliche Shunt-Widerstände (31) in die Versorgungsleitung (5) in Serie integriert sind,
wobei jeder Sensor (3) eingerichtet ist, einen Spannungsabfall an seinem jeweiligen Shunt-Widerstand (31) zu erfassen, und
wobei die Steuervorrichtung (2) eingerichtet ist:
- jeden Sensor (3) mittels der individuellen Sensorkennung zu betätigen, und
- basierend auf den erfassten Spannungsabfällen entlang der Versorgungsleitung (5) jedem Sensor (3) eine individuelle geographische Adresse zuzuweisen.

2. Sensor-Anordnung nach Anspruch 1, wobei nach Betätigung des Sensors (3) dieser ein Stromsignal auf der Versorgungsleitung (5) erzeugt, welches eine bestimmte Frequenzsignatur aufweist.

3. Sensor-Anordnung nach einem der vorhergehenden Ansprüche, wobei ein Spannungsabgriff jedes Sensors (3), zur Spannungsversorgung von Sensorkomponenten (35) des Sensors (3), an der Versorgungsleitung (5) vor oder nach dem jeweiligen Shunt-Widerstand (31) ausgebildet ist.

4. Sensor-Anordnung nach einem der vorhergehenden Ansprüche, wobei der Shunt-Widerstand (31) ein Metallfilm-Widerstand oder eine Kupfer-Leiterbahn ist oder wenigstens einen Bonddraht umfasst.

5. Sensor-Anordnung nach einem der vorhergehenden Ansprüche, wobei der Shunt-Widerstand (31) einen elektrischen Widerstand von maximal 0,1 Ω, insbesondere maximal 0,01 Ω, vorzugsweise mindestens 0,001 Ω, aufweist.

6. Sensor-Anordnung nach einem der vorhergehenden Ansprüche, wobei jeder Sensor (3) einen Differenzverstärker aufweist, mittels welchem der Spannungsabfall über den jeweiligen Shunt-Widerstand (31) ermittelt wird.

7. Sensor-Anordnung nach Anspruch 6, wobei jeder Sensor (3) einen Filter, insbesondere einen Bandpassfilter oder einen Optimalfilter, umfasst, und wobei der Filter eingerichtet ist, ein von dem Differenzverstärker erzeugtes Ausgangssignal zu filtern.

8. Sensor-Anordnung nach einem der vorhergehenden Ansprüche, wobei die Masseleitung (50) und/oder der Datenbus (4) durch jeden Sensor (3) hindurchgeführt ist, insbesondere jeweils mittels eines Eingangspins (43, 56) und eines Ausgangspins (44, 57) pro Sensor (3).

9. Sensor-Anordnung nach einem der vorhergehenden Ansprüche, wobei die Steuervorrichtung (2) und/oder jeder Sensor (3) einen nicht-flüchtigen Speicher aufweist, oder wobei die Steuervorrichtung (2) und/oder jeder Sensor (3) speicherlos ausgebildet ist.

10. Sensor-Anordnung nach einem der vorhergehenden Ansprüche, wobei die Sensoren (3) Ultraschallsensoren sind.

11. Verfahren zur Adressierung von Sensoren (3) einer Sensor-Anordnung (1), wobei die Sensor-Anordnung (1) eine Steuervorrichtung (2), eine Vielzahl an Sensoren (3), wobei jeder Sensor (3) eine individuelle Sensorkennung aufweist, einen Datenbus (4), welcher jeden Sensor (3) mit der Steuervorrichtung (2) verbindet, eine Versorgungsleitung (5), welche jeden Sensor (3) zur Spannungsversorgung mit der Steuervorrichtung (2) verbindet, aufweist, wobei jeder Sensor (3) einen Shunt-Widerstand (31) aufweist, wobei sämtliche Shunt-Widerstände (31) in die Versorgungsleitung (5) in Serie integriert sind, und
wobei das Verfahren pro Sensor (3) die Schritte umfasst:
- Identifizieren der Sensorkennung des Sensors (3),
- Betätigen des Sensors (3) basierend auf der Sensorkennung,
- Ermitteln von Spannungsabfällen an den Shunt-Widerständen (31) sämtlicher Sensoren (3),
- Ermitteln einer Position des betätigten Sensors (3) relativ zu den weiteren Sensoren (3), und
- Zuweisen einer individuellen geographischen Adresse an den Sensor (3) basierend auf der ermittelten Position,
wobei das Ermitteln der Position des betätigten Sensors (3) basierend auf den erfassten Spannungsabfällen entlang der Versorgungsleitung (5) erfolgt.

12. Verfahren nach Anspruch 11, wobei sämtliche Sensoren (3) nacheinander betätigt werden, und wobei nach dem Betätigen aller Sensoren (3) eine Reihenfolge der Sensoren (3) am Datenbus (4) basierend auf einer absteigenden Anzahl an erfassten Spannungsabfällen pro Sensor (3) ermittelt wird.

13. Verfahren nach Anspruch 11, wobei jeder Sensor (3) separat betätigt wird, wobei nach jedem Betätigen eines einzelnen Sensors (3) eine Gesamtanzahl an Spannungsabfällen an sämtlichen Sensoren (3) ermittelt wird, und wobei die Position des betätigten Sensors (3) relativ zu den weiteren Sensoren (3) basierend auf der Gesamtanzahl an Spannungsabfällen ermittelt wird.

14. Verfahren nach Anspruch 11, wobei jeder Sensor (3) zeitgleich, insbesondere simultan, betätigt wird, wobei nach dem zeitgleichen Betätigen jedes Sensors (3) die an jedem Sensor ermittelte Höhe eines Spannungsabfalls ermittelt wird, und wobei die Position des betätigten Sensors (3) relativ zu den weiteren Sensoren (3) basierend auf der an jedem Sensor ermittelten Höhe eines Spannungsabfalls ermittelt wird.

15. Verfahren nach einem der Ansprüche 11 bis 14, wobei die Spannungsabfälle über die Shunt-Widerstände (31) jeweils mittels eines Differenzverstärkers verstärkt werden, wobei ein vom Differenzverstärker erzeugtes Ausgangssignal jeweils mittels eines an die Frequenzsignatur angepassten Filters gefiltert wird, und wobei basierend auf dem Ausgangssignal des Filters eine Höhe des Spannungsabfalls am Shunt-Widerstand (31) ermittelt wird.

16. Verfahren nach einem der Ansprüche 11 bis 15, wobei jedem Sensor (3) vor dem Betätigen eine logische Adresse basierend auf der Sensorkennung zugewiesen wird, und wobei das Betätigen des Sensors (3) mittels der logischen Adresse erfolgt.

17. Verfahren nach einem der Ansprüche 11 bis 16, wobei jede geographische Adresse in einem nicht-flüchtigen Speicher jedes Sensors (3) und/oder in einem nicht-flüchtigen Speicher der Steuervorrichtung (2) gespeichert wird.

## Claims

1. Sensor arrangement of a vehicle, comprising:
- a control device (2),
- a multiplicity of sensors (3), wherein each sensor (3) has an individual sensor identifier,
- a data bus (4) that connects each sensor (3) to the control device (2), and
- a supply line (5) that connects each sensor (3) to the control device (2) for the supply of voltage,
wherein each sensor (3) has a shunt resistor (31),
wherein all shunt resistors (31) are integrated in series into the supply line (5),
wherein each sensor (3) is configured to detect a voltage drop across its respective shunt resistor (31), and
wherein the control device (2) is configured:
- to actuate each sensor (3) using the individual sensor identifier, and
- to assign an individual geographical address to each sensor (3) based on the detected voltage drops along the supply line (5).

2. Sensor arrangement according to Claim 1, wherein, after actuation of the sensor (3), the latter generates a current signal on the supply line (5), which has a certain frequency signature.

3. Sensor arrangement according to one of the preceding claims, wherein a voltage tap of each sensor (3) is designed to supply voltage to sensor components (35) of the sensor (3) on the supply line (5) upstream or downstream of the respective shunt resistor (31).

4. Sensor arrangement according to one of the preceding claims, wherein the shunt resistor (31) is a metal film resistor or a copper conductor track or comprises at least one bonding wire.

5. Sensor arrangement according to one of the preceding claims, wherein the shunt resistor (31) has an electrical resistance of at most 0.1 Ω, in particular at most 0.01 Ω, preferably at least 0.001 Ω.

6. Sensor arrangement according to one of the preceding claims, wherein each sensor (3) has a differential amplifier which is used to determine the voltage drop across the respective shunt resistor (31).

7. Sensor arrangement according to Claim 6, wherein each sensor (3) comprises a filter, in particular a bandpass filter or an optimal filter, and wherein the filter is configured to filter an output signal generated by the differential amplifier.

8. Sensor arrangement according to one of the preceding claims, wherein the earth line (50) and/or the data bus (4) is passed through each sensor (3), in particular in each case by means of one input pin (43, 56) and one output pin (44, 57) per sensor (3).

9. Sensor arrangement according to one of the preceding claims, wherein the control device (2) and/or each sensor (3) has a non-volatile memory, or wherein the control device (2) and/or each sensor (3) is formed without a memory.

10. Sensor arrangement according to one of the preceding claims, wherein the sensors (3) are ultrasonic sensors.

11. Method for addressing sensors (3) of a sensor arrangement (1), wherein the sensor arrangement (1) has a control device (2), a multiplicity of sensors (3), wherein each sensor (3) has an individual sensor identifier, a data bus (4) that connects each sensor (3) to the control device (2), a supply line (5) that connects each sensor (3) to the control device (2) for the supply of voltage, wherein each sensor (3) has a shunt resistor (31), wherein all shunt resistors (31) are integrated in series into the supply line (5), and
wherein the method, for each sensor (3), comprises the steps of:
- identifying the sensor identifier of the sensor (3),
- actuating the sensor (3) based on the sensor identifier,
- determining voltage drops across the shunt resistors (31) of all sensors (3),
- determining a position of the actuated sensor (3) relative to the other sensors (3), and
- assigning an individual geographical address to the sensor (3) based on the position determined,
wherein the position of the actuated sensor (3) is determined based on the voltage drops detected along the supply line (5).

12. Method according to Claim 11, wherein all sensors (3) are actuated in succession, and wherein, after actuating all sensors (3), an order of the sensors (3) on the data bus (4) is determined based on a descending number of detected voltage drops per sensor (3).

13. Method according to Claim 11, wherein each sensor (3) is actuated separately, wherein, after each actuation of a single sensor (3), a total number of voltage drops across all sensors (3) is determined, and wherein the position of the actuated sensor (3) relative to the other sensors (3) is determined based on the total number of voltage drops.

14. Method according to Claim 11, wherein each sensor (3) is actuated at the same time, in particular simultaneously, wherein, after the actuation of each sensor (3) at the same time, the level of a voltage drop determined at each sensor is determined, and wherein the position of the actuated sensor (3) relative to the other sensors (3) is determined based on the level of a voltage drop determined at each sensor.

15. Method according to one of Claims 11 to 14, wherein the voltage drops across the shunt resistors (31) are each amplified by means of a differential amplifier, wherein an output signal generated by the differential amplifier is respectively filtered by means of a filter adapted to the frequency signature, and wherein, based on the output signal from the filter, a level of the voltage drop across the shunt resistor (31) is determined.

16. Method according to one of Claims 11 to 15, wherein each sensor (3) is assigned a logical address based on the sensor identifier before actuation, and wherein the sensor (3) is actuated by means of the logical address.

17. Method according to one of Claims 11 to 16, wherein each geographical address is stored in a non-volatile memory of each sensor (3) and/or in a non-volatile memory of the control device (2).

## Revendications

1. Arrangement de capteurs d'un véhicule, comprenant :
- un dispositif de commande (2),
- une pluralité de capteurs (3), chaque capteur (3) possédant un identifiant de capteur individuel,
- un bus de données (4), lequel relie chaque capteur (3) au dispositif de commande (2), et
- une ligne d'alimentation (5), laquelle relie chaque capteur (3) au dispositif de commande (2) pour l'alimentation électrique,
chaque capteur (3) possédant une résistance de shunt (31),
toutes les résistances de shunt (31) étant intégrées en série dans la ligne d'alimentation (5),
chaque capteur (3) étant conçu pour détecter une chute de tension aux bornes de sa résistance de shunt (31) respective, et
le dispositif de commande (2) étant conçu pour :
- actionner chaque capteur (3) au moyen de l'identifiant de capteur individuel, et
- attribuer une adresse géographique individuelle à chaque capteur (3) sur la base des chutes de tension détectées le long de la ligne d'alimentation (5).

2. Arrangement de capteurs selon la revendication 1, le capteur (3), après son actionnement, générant un signal de courant sur la ligne d'alimentation (5), lequel présente une signature de fréquence déterminée.

3. Arrangement de capteurs selon l'une des revendications précédentes, une prise de tension de chaque capteur (3), destinée à l'alimentation électrique de composants de capteur (35) du capteur (3), étant formée sur la ligne d'alimentation (5) avant ou après la résistance de shunt (31) respective.

4. Arrangement de capteurs selon l'une des revendications précédentes, la résistance de dérivation (31) étant une résistance à film métallique ou une piste conductrice en cuivre ou comprenant au moins un fil de connexion.

5. Arrangement de capteurs selon l'une des revendications précédentes, la résistance de shunt (31) présentant une résistance électrique maximale de 0,1 Ω, notamment maximale de 0,01 Ω, de préférence d'au moins 0,001 Ω.

6. Arrangement de capteurs selon l'une des revendications précédentes, chaque capteur (3) possédant un amplificateur différentiel au moyen duquel est déterminée la chute de tension aux bornes de la résistance de shunt (31) respective.

7. Arrangement de capteurs selon la revendication 6, chaque capteur (3) comprenant un filtre, notamment un filtre passe-bande ou un filtre optimal, et le filtre étant conçu pour filtrer un signal de sortie généré par l'amplificateur différentiel.

8. Arrangement de capteurs selon l'une des revendications précédentes, la ligne de masse (50) et/ou le bus de données (4) passant à travers chaque capteur (3), notamment au moyen respectivement d'une broche d'entrée (43, 56) et d'une broche de sortie (44, 57) par capteur (3).

9. Arrangement de capteurs selon l'une des revendications précédentes, le dispositif de commande (2) et/ou chaque capteur (3) possédant une mémoire non volatile, ou le dispositif de commande (2) et/ou chaque capteur (3) étant configuré sans mémoire.

10. Arrangement de capteurs selon l'une des revendications précédentes, les capteurs (3) étant des capteurs à ultrasons.

11. Procédé d'adressage de capteurs (3) d'un arrangement de capteurs (1), l'arrangement de capteurs (1) possédant un dispositif de commande (2), une pluralité de capteurs (3), chaque capteur (3) possédant un identifiant de capteur individuel, un bus de données (4), lequel relie chaque capteur (3) au dispositif de commande (2), une ligne d'alimentation (5), laquelle relie chaque capteur (3) au dispositif de commande (2) pour l'alimentation électrique, chaque capteur (3) possédant une résistance de shunt (31), toutes les résistances de shunt (31) étant intégrées en série dans la ligne d'alimentation (5), et
le procédé comprenant, par capteur (3), les étapes de :
- identification de l'identifiant de capteur du capteur (3),
- actionnement du capteur (3) sur la base de l'identifiant de capteur,
- détermination de chutes de tension aux bornes des résistances de shunt (31) de tous les capteurs (3),
- détermination d'une position du capteur (3) actionné par rapport aux autres capteurs (3), et
- attribution d'une adresse géographique individuelle au capteur (3) sur la base de la position déterminée,
la détermination de la position du capteur (3) actionné s'effectuant sur la base
des chutes de tension détectées le long de la ligne d'alimentation (5).

12. Procédé selon la revendication 11, tous les capteurs (3) étant actionnés les uns après les autres et, après l'actionnement de tous les capteurs (3), un ordre des capteurs (3) sur le bus de données (4) étant déterminé sur la base d'un nombre décroissant de chutes de tension détectées par capteur (3).

13. Procédé selon la revendication 11, chaque capteur (3) étant actionné séparément, un nombre total de chutes de tension au niveau de tous les capteurs (3) étant déterminé après chaque actionnement d'un capteur (3) individuel, et la position du capteur (3) actionné par rapport aux autres capteurs (3) étant déterminée sur la base du nombre total de chutes de tension.

14. Procédé selon la revendication 11, chaque capteur (3) étant actionné en même temps, en particulier simultanément, la hauteur déterminée d'une chute de tension au niveau de chaque capteur étant déterminée après l'actionnement simultané de chaque capteur (3), et la position du capteur (3) actionné par rapport aux autres capteurs (3) étant déterminée sur la base de la hauteur d'une chute de tension déterminée au niveau de chaque capteur.

15. Procédé selon l'une des revendications 11 à 14, les chutes de tension aux bornes des résistances de shunt (31) étant respectivement amplifiées au moyen d'un amplificateur différentiel, un signal de sortie généré par l'amplificateur différentiel étant respectivement filtré au moyen d'un filtre adapté à la signature de fréquence, et une hauteur de la chute de tension aux bornes de la résistance de shunt (31) étant déterminée sur la base du signal de sortie du filtre.

16. Procédé selon l'une des revendications 11 à 15, une adresse logique basée sur l'identifiant de capteur étant attribuée à chaque capteur (3) avant l'actionnement, et l'actionnement du capteur (3) s'effectuant au moyen de l'adresse logique.

17. Procédé selon l'une des revendications 11 à 16, chaque adresse géographique étant mémorisée dans une mémoire non volatile de chaque capteur (3) et/ou dans une mémoire non volatile du dispositif de commande (2).
